# EUROPEAN PATENT APPLICATION

(11) **EP 4 755 684 A1**
(43) Date of publication of application: **10.06.2026**
(21) Application number: 25214433.2
(22) Date of filing: 07.11.2025
(51) Int. Cl.: B60K 6/383, B60K 6/387, B60K 6/448, B60K 6/52, B60K 6/48

(54) **SYSTEMS FOR RANGE EXTENDER AND HYBRID VEHICLE PROPULSION**

(30) Priority: 05.12.2024 US 202418970162
(71) Applicant: Borgwarner Inc., Auburn Hills, Michigan 48326 (US)
(72) Inventor: VAN MAANEN, Keith, Bloomfield Hills, MI (US); ISHIHARA, Mitsuru, Rochester Hills, MI (US)
(74) Representative: Office Freylinger

(57) **Abstract**

A range extender system may include a first electric machine. A range extender system may include a first gearbox. A range extender system may include an engine. A range extender system may include a first connector to couple and decouple the first electric machine to and from the engine. A range extender system may include a second connector to couple and decouple the first electric machine to and from the first gearbox.

## Description

### TECHNICAL FIELD

Various embodiments of the present disclosure relate generally to a powertrain of a vehicle, and more specifically, to systems and methods of a hybrid range extending powertrain.

### BACKGROUND

A range extending powertrain in a hybrid (e.g., electric and combustion fuel) vehicle includes a combustion engine and generator to charge the battery and a traction electric machine to provide propulsion for the system (e.g., drive the system). Drive systems may create inefficiencies when not in use, as these systems add weight to the vehicle. Additionally, the range extending powertrain requires a combustion engine, a generator, and a traction electric machine. This leads to higher system costs and complex integration.

The present disclosure is directed to overcoming one or more of these above referenced challenges.

### SUMMARY OF THE DISCLOSURE

In some aspects, the techniques described herein relate to a range extender system including: a first electric machine; a first gearbox; an engine; a first connector to couple and decouple the first electric machine to and from the engine; and a second connector to couple and decouple the first electric machine to and from the first gearbox.

In some aspects, the techniques described herein relate to a range extender system, further including: a first axle; and a third connector to couple and decouple the first gearbox from the first axle.

In some aspects, the techniques described herein relate to a range extender system, wherein the first connector includes a first one-way clutch, and wherein the second connector includes a second one-way clutch.

In some aspects, the techniques described herein relate to a range extender system, wherein the first connector includes a chain transfer.

In some aspects, the techniques described herein relate to a range extender system, wherein the engine is an internal combustion engine.

In some aspects, the techniques described herein relate to a range extender system, further including: a first axle; and a third connector to couple and decouple the engine from the first gearbox, wherein the engine drives the first axle directly or in parallel with the first electric machine via the third connector.

In some aspects, the techniques described herein relate to a range extender system, wherein the first connector is one or more of a damper, a chain transfer, or a one-way clutch.

In some aspects, the techniques described herein relate to a range extender system, wherein the first connector includes a gear transfer that has a gear ratio of 3:1.

In some aspects, the techniques described herein relate to a range extender system, wherein the first connector includes a friction clutch or an electromechanical dog clutch.

In some aspects, the techniques described herein relate to a range extender system, wherein the second connector includes a differential disconnect.

In some aspects, the techniques described herein relate to a range extender system, further including: a gear train coupled to the engine; and a gear train coupled to the first electric machine, wherein the gear train of the engine and the gear train of the first electric machine are coupled to create a multi-speed connection between the engine and the first electric machine.

In some aspects, the techniques described herein relate to a hybrid vehicle including: a battery; a fuel tank; a first electric machine; a first gearbox; an engine; a first connector to couple and decouple the first electric machine to and from the engine; and a second connector to couple and decouple the first electric machine to and from the first gearbox.

In some aspects, the techniques described herein relate to a hybrid vehicle, further including a first axle, wherein the first electric machine is configured to drive the first axle when the engine is off, and wherein the first electric machine is configured to generate electric power that is stored in the battery when the second connector decouples the first electric machine from the first gearbox.

In some aspects, the techniques described herein relate to a hybrid vehicle, wherein the first connector includes a one-way clutch.

In some aspects, the techniques described herein relate to a hybrid vehicle, wherein the second connector includes a one-way clutch.

In some aspects, the techniques described herein relate to a range extender system including: a first connector to couple and decouple an electric machine to and from an engine; and a second connector to couple and decouple the electric machine to and from an axle.

In some aspects, the techniques described herein relate to a range extender system, further including a gearbox connected to the axle, wherein the second connector couples and decouples the electric machine to and from the gearbox.

In some aspects, the techniques described herein relate to a range extender system, further including a third connector to couple and decouple the engine from the axle, and wherein the axle is driven with the engine directly or in parallel with the electric machine.

In some aspects, the techniques described herein relate to a range extender system, wherein the first connector includes a friction clutch.

In some aspects, the techniques described herein relate to a range extender system, wherein the first connector includes a chain transfer.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary powertrain of a vehicle, according to one or more embodiments.
FIG. 2 depicts an exemplary powertrain of a vehicle with a connector between a gearbox and an axle, according to one or more embodiments.
FIG. 3 depicts an exemplary powertrain of a vehicle with an engine directly and indirectly coupled to a gearbox of an axle, according to one or more embodiments.
FIG. 4 depicts an exemplary powertrain of a vehicle with a plurality of connectors, according to one or more embodiments.
FIG. 5 depicts an exemplary powertrain of a vehicle with a chain drive, according to one or more embodiments.
FIG. 6 depicts an exemplary powertrain of a vehicle with a connector including a chain transfer, according to one or more embodiments.
FIG. 7 depicts an exemplary powertrain of a vehicle with a multi-speed connection, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section.

Range extending may be considered a key technical aspect in a hybrid vehicle system. The powertrain may therefore be a critical component in a range extending propulsion system, which transmits the drive from an engine and/or electric machine to an axle of an overall driving system of a hybrid vehicle. Therefore, reduced weight and/or complexity of a range extending (RE) propulsion system may be a demanding technology for performance and reliability of hybrid vehicle systems. However, RE powertrains often include an internal combustion engine (ICE) and a generator that are dedicated to charging the battery and a traction electric machine dedicated to driving the axle. This type of architecture creates unnecessary inefficiencies and complexities.

One or more embodiments may include a powertrain with an electric machine that may be coupled and decoupled to an engine via a connector. One or more embodiments may provide a powertrain with a first connector to couple and decouple an electric machine from a gearbox of an axle. One or more embodiments may provide a connector that may couple and decouple an engine to a gearbox of an axle. One or more embodiments may provide an engine that may directly drive an axle or drive an axle in parallel with an electric machine.

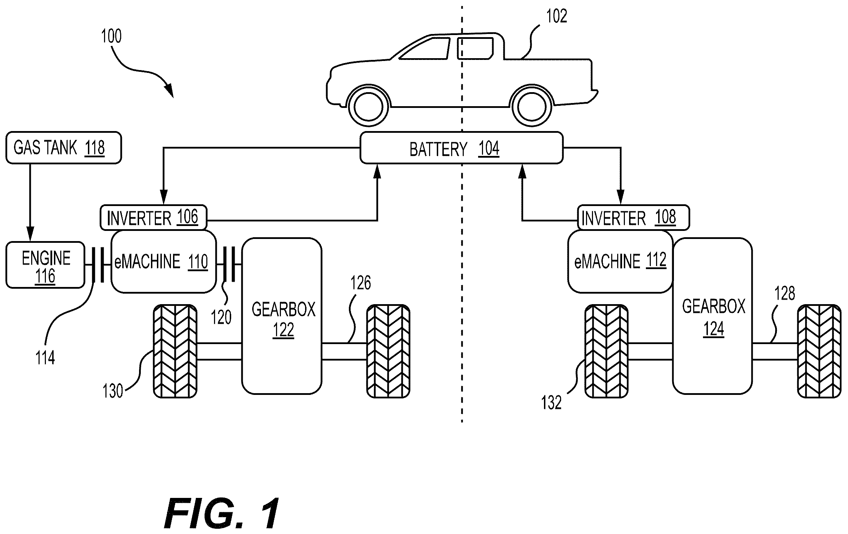

FIG. 1 depicts an exemplary powertrain of a vehicle, according to one or more embodiments. Powertrain 100 may be an RE propulsion system of a hybrid vehicle 102. Powertrain 100 may include a first inverter 106, a second inverter 108, a first electric machine 110, a second electric machine 112, a first connector 114, an engine 116, a fuel tank 118, a second connector 120, a first gearbox 122, and a second gearbox 124. Hybrid vehicle 102 may include powertrain 100, a battery 104, a first axle 126, a second axle 128, a first set of wheels 130, and a second set of wheels 132. Powertrain 100 may provide power to drive first axle 126 and second axle 128 and/or powertrain 100 may provide power for battery 104 to store. Hybrid vehicle 102 may utilize all-wheel drive (e.g., propulsion is provided to both first axle 126 and second axle 128), rear-wheel drive (e.g., propulsion is provided to only second axle 128), and/or front-wheel drive (e.g., propulsion is provided to only first axle 126). Hybrid vehicle 102 may be powered by combustion fuel (e.g., gas) used by an internal combustion engine (e.g., engine 116) and/or by electricity used by first electric machine 110 and second electric machine 112.

First inverter 106 may be coupled to first electric machine 110 and second inverter 108 may be coupled to second electric machine 112. First axle 126 may be a front axle of hybrid vehicle 102 while second axle 128 may be a rear axle of hybrid vehicle 102. First connector 114 may couple and decouple first electric machine 110 to and from engine 116. First connector 114 may include a one-way clutch, a selectable one-way clutch, a multi-mode clutch, one or more friction clutches, an electromechanical dog clutch, or any combination thereof. In some examples, when first connector 114 (or any other connector described herein) includes a one-way clutch, another open disconnect may be required for reverse movement of vehicle 102. In some examples, a selectable one-way clutch may prevent regenerative braking or all-wheel-drive reverse.

Second connector 120 may couple and decouple first electric machine 110 to and from first axle 126 via first gearbox 122. Second connector 120 may include a one-way clutch, a selectable one-way clutch, a multi-mode clutch, one or more friction clutches, an electromechanical dog clutch, or any combination thereof. Engine 116 may drive first electric machine 110 via a direct connection, a chain transfer, a gear transfer, a multi-speed gear transfer, an intermediate gear transfer to motor gear transfer, a chain to transfer to motor gear train, a planetary gear connection, or any combination thereof.

As depicted in FIG. 1, powertrain 100 may include two electric machines (e.g., first electric machine 110 to drive first axle 126 and second electric machine 112 to drive second axle 128). The architecture of powertrain 100 enables first electric machine 110 to be multi-functional, which allows powertrain 100 to require only two electric machines (e.g., first electric machine 110 and second electric machine 112). Specifically, first connector 114 and second connector 120 allow first electric machine 110 to provide traction effort (e.g., drive) to first axle 126 and to generate electricity for battery 104 to store when driven by engine 116. First electric machine 110 may generate electricity during regeneration braking. When the engine 116 is turned off, first electric machine 110 may provide drive power to first axle 126 as a secondary drive system. When hybrid vehicle 102 does not require all-wheel drive and only needs to rely on the drive from second electric machine 112 to second axle 128, first electric machine 110 may be decoupled from first axle 126 via second connector 120 and coupled to engine 116 via first connector 114 to generate electric power that is stored in battery 104. The engine 116 may be coupled to first axle 126 to drive the vehicle directly or in parallel with first electric machine 110 when the first electric machine 110 is acting as a generator or a motor, as will be further described below.

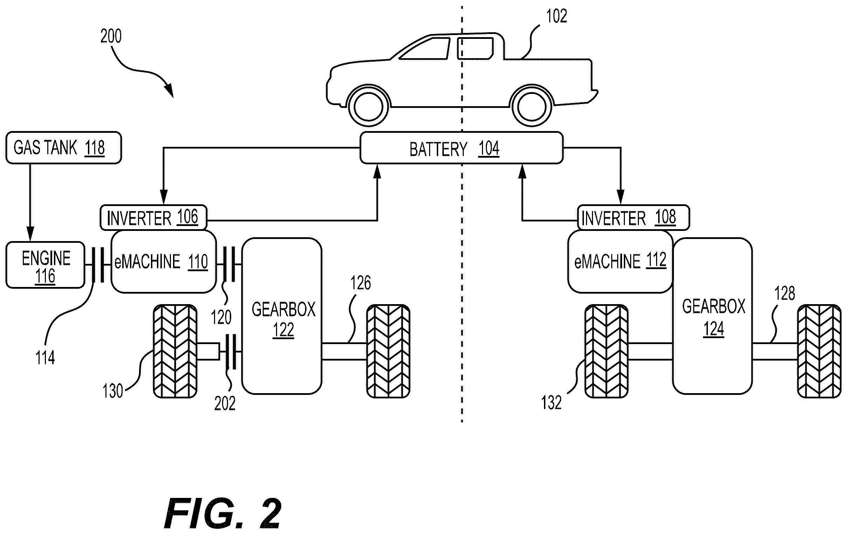

FIG. 2 depicts an exemplary powertrain of a vehicle with a connector between a gearbox and an axle, according to one or more embodiments. Powertrain 200 depicted in FIG. 2 may be similar to powertrain 100 and used by hybrid vehicle 102. Powertrain 200 may include a third connector 202 between first gearbox 122 and first set of wheels 130 in addition to first connector 114 and second connector 120. Thus, first gearbox 122 may be coupled and decoupled to and from first set of wheels 130 via third connector 202. Third connector 202 may include a one-way clutch, a selectable one-way clutch, a multi-mode clutch, one or more friction clutches, wheel end disconnects, a differential disconnect, an electromechanical dog clutch, or any combination thereof.

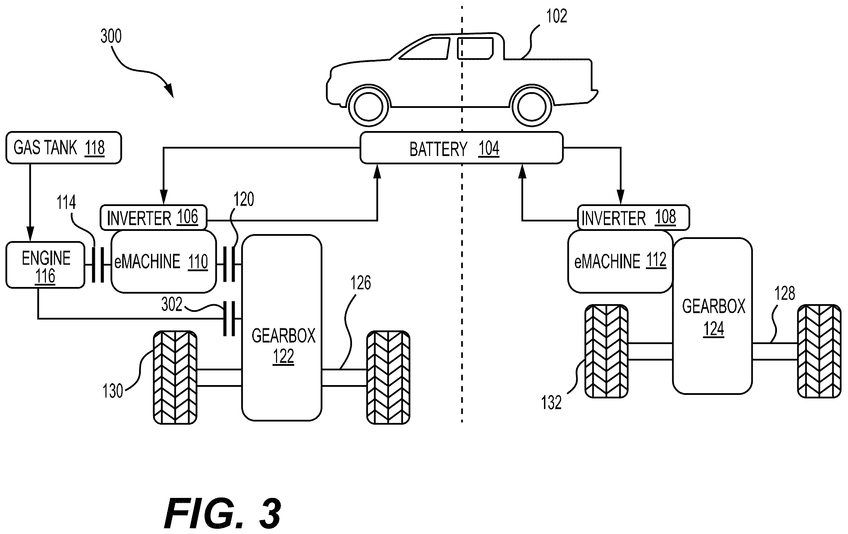

FIG. 3 depicts an exemplary powertrain of a vehicle with an engine directly and indirectly coupled to a gearbox of an axle, according to one or more embodiments. Powertrain 300 depicted in FIG. 3 may be similar to powertrain 100 and used by hybrid vehicle 102. Powertrain 300 may include a third connector 302 between engine 116 and first gearbox 122 in addition to first connector 114 and second connector 120. Thus, engine 116 may be coupled and decoupled to and from first gearbox 122 via third connector 302. Third connector 302 may include a one-way clutch, a selectable one-way clutch, a multi-mode clutch, one or more friction clutches, an electromechanical dog clutch, or any combination thereof. Third connector 302 may be a direct connection to maintain a connection between engine 116 and first gearbox 122. The architecture depicted in FIG. 3 may allow engine 116 to directly drive first axle 126 or drive first axle 126 in parallel with first electric machine 110.

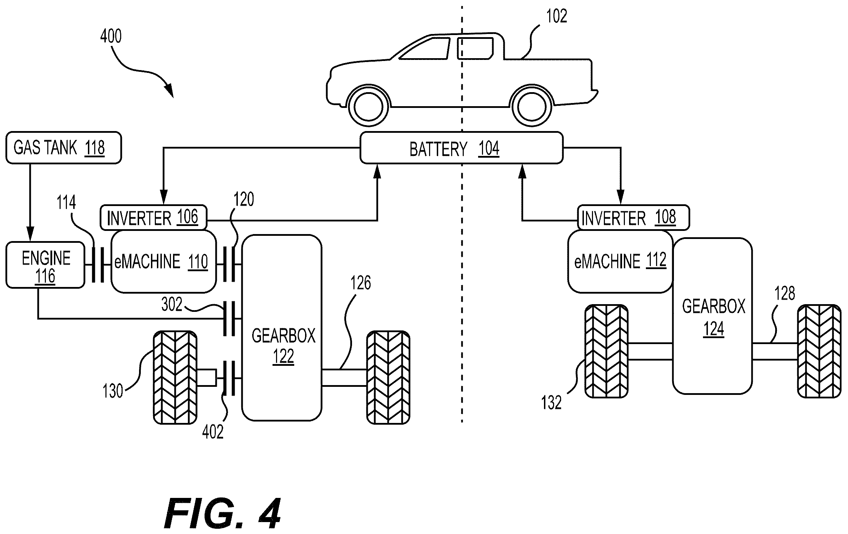

FIG. 4 depicts an exemplary powertrain of a vehicle with a plurality of connectors, according to one or more embodiments. Powertrain 400 depicted in FIG. 4 may be similar to powertrain 300 and used by hybrid vehicle 102. That is, powertrain 400 may include first connector 114, second connector 120, and third connector 302. Powertrain 400 may additionally include a fourth connector 402 between first gearbox 122 and first set of wheels 130, similarly to the architecture depicted in powertrain 200 of FIG. 2. Fourth connector 402 may include a one-way clutch, a selectable one-way clutch, a multi-mode clutch, one or more friction clutches, wheel end disconnects, a differential disconnect, an electromechanical dog clutch, or any combination thereof.

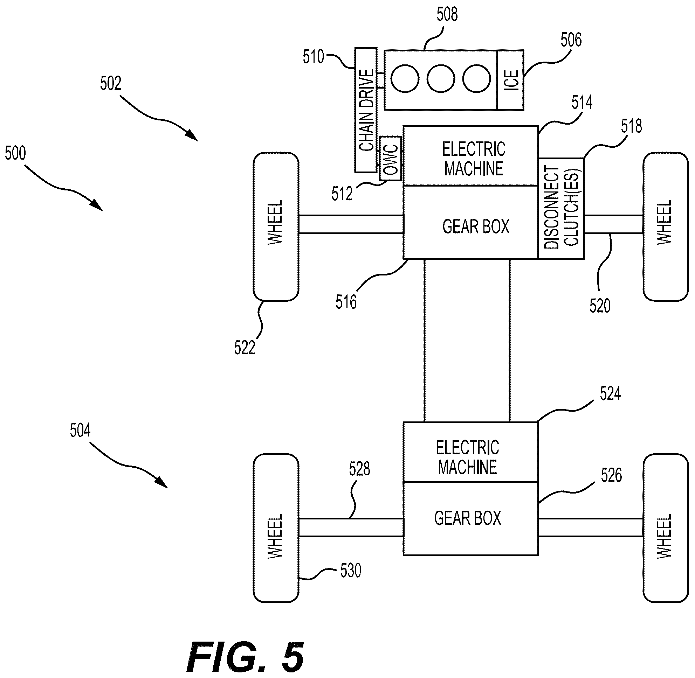

FIG. 5 depicts an exemplary powertrain of a vehicle with a chain drive, according to one or more embodiments. Powertrain 500 may be an RE propulsion system for a hybrid vehicle. Powertrain 500 may include a front drive unit 502 and a rear drive unit 504. Front drive unit 502 may include an engine 506, a damper 508, a chain transfer 510, a one-way clutch 512, a first electric machine 514, a first gearbox 516, a connector 518, a first axle 520, and a first set of wheels 522. One-way clutch 512, in some examples, may be a selectable one-way clutch, a multi-mode clutch, an electromechanical dog clutch, or a friction clutch. Rear drive unit 504 may include a second electric machine 524, a second gearbox 526, a second axle 528, and a second set of wheels 530. Second gearbox 526 may be coupled to second axle 528 and second electric machine 524 to provide drive power from second electric machine 524 to second axle 528 (and subsequently to second set of wheels 530). Engine 506 may be an internal combustion engine. Engine 506 may drive first electric machine 514 via a direct connection, a chain transfer, a gear transfer, a multi-speed gear transfer, an intermediate gear transfer to motor gear transfer, a chain to transfer to motor gear train, a planetary gear connection, or any combination thereof.

The combination of damper 508, chain transfer 510, and one-way clutch 512 may couple and decouple first electric machine 514 to and from engine 506. The connection between engine 506 and first electric machine 514 may also facilitate the drive power provided to first electric machine 514 by engine 506. Front drive unit 502 may include connector 518 to couple and decouple first axle 520 from the drive power of powertrain 500. Connector 518 may be a direct connection that can be disconnected, a clutch, or a differential disconnect. Connector 518 may include a plurality of clutches to disconnect first axle 520. When front drive unit 502 is disconnected, the engine 506 may drive first electric machine 514 to generate electricity to recharge a battery (not depicted in FIG. 5) of the hybrid vehicle powertrain 500 drives.

Front drive unit 502 may be able to be disconnected at any speed of the hybrid vehicle 102. At lower speeds (e.g., less than or equal to approximately 25 mph), front drive unit 502 and rear drive unit 504 may be connected such that both first axle 520 and second axle 528 are driven. At these lower speeds, first electric machine 514 may provide drive power from the stored battery power to first axle 520 while engine 506 is not running, for more efficient energy consumption. At higher speeds (e.g., greater than or equal to about 25 mph), engine 506 may independently provide drive power (e.g., first electric machine 514 does not provide any drive power) to first axle 520 along with second electric machine 524, providing drive to second axle 528.At these higher speeds, engine 506 and first electric machine 514 may provide drive power together to first axle 520. Engine 506 may provide drive power only to first axle 520, and no drive is provided to second axle 528.

A gearbox (not depicted) or chain transfer 510 between engine 506 and first electric machine 514 may match a speed of engine 506 to a speed of first electric machine 514. Electrical machines often operate at a much higher speed than engines. A gear or chain ratio may be provided to ensure front drive unit 502 has a consistent speed. A gear transfer or chain transfer between engine 506 and first electric machine 514 may have a ratio of 2:1, 3:1, 5:1, 7:1, or 10:1, for example. The connection between engine 506 (or, e.g., first electric machine 110) and first electric machine 514 (or, e.g., engine 116) may be a multi-speed connection. An intermediate drive may be provided from engine 506 (or, e.g., first electric machine 110) to first electric machine 514 (or, e.g., engine 116) by coupling a gear train of the engine 506 drive and a gear train of the first electric machine 514 drive.

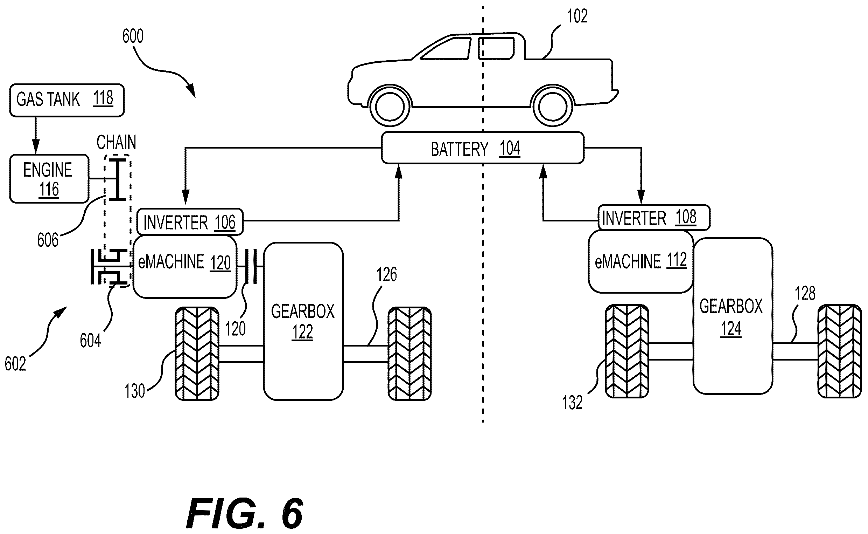

FIG. 6 depicts an exemplary powertrain of a vehicle with a connector including a chain transfer, according to one or more embodiments. Powertrain 600 depicted in FIG. 6 may be similar to powertrain 100 and used by hybrid vehicle 102. Powertrain 600 may include a first connector 602 with a clutch 604 (e.g., a one-way clutch, an electromechanical dog clutch, etc.) and a chain transfer 606 between engine 116 and first electric machine 110. Chain transfer 606 may be a gear transfer and/or may include a chain or gear ratio to synchronize rpm between engine 116 and first electric machine 110.

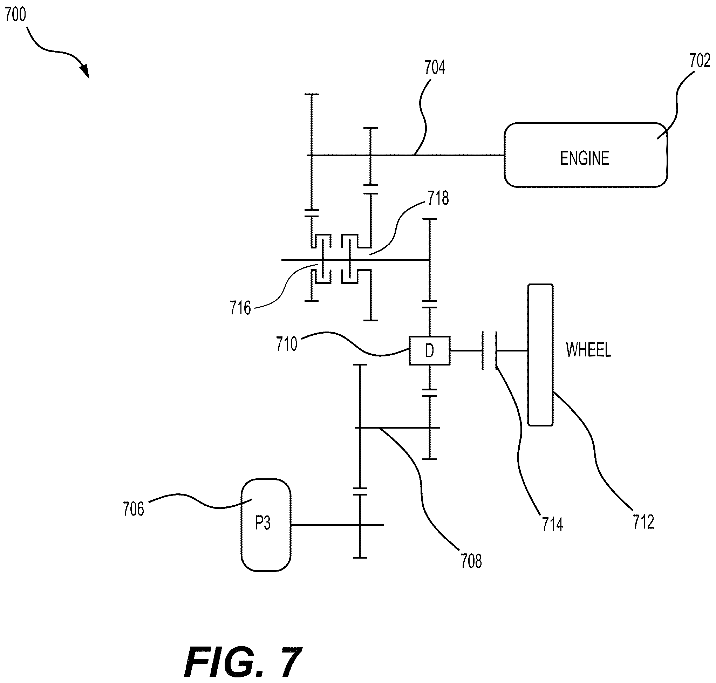

FIG. 7 depicts an exemplary powertrain of a vehicle with a multi-speed connection, according to one or more embodiments. Power train 700 may include an engine 702, an engine gear train 704, an electric machine 706, an electric machine gear train 708, an axle differential 710, a first clutch 716, and a second clutch 718. Wheels 712 (or, in general, an axle) may be driven by power train 700 and connected to power train 700 via a connector 714. Connector 714 may couple and decouple wheels 712 and power train 700. Connector 714 may include a one-way clutch, a selectable one-way clutch, a multi-mode clutch, one or more friction clutches, wheel end disconnects, a differential disconnect, an electromechanical dog clutch, or any combination thereof. First clutch 716 may operate at a higher speed than second clutch 718. First clutch 716 and/or second clutch 718 may include a selectable one-way clutch, a multi-mode clutch, an electromechanical dog clutch, a friction clutch, or any combination thereof. Engine gear train 704 and electric machine gear train 708 may be coupled and create an intermediate drive. Thus, the connection between engine 702 and electric machine 706 may create a multi-speed connection between engine 702, electric machine 706, and wheels 712 since the engine 702 and the electric machine 706 are arranged in parallel.

One or more embodiments may provide a lighter and more affordable powertrain by using an electric machine and an engine for both charging a battery and driving an axle. One or more embodiments may provide a more cost efficient and/or environmentally friendly powertrain by utilizing both an electric and an engine to drive an axle and to store electric energy in a battery. One or more embodiments may reduce the complexity of a powertrain. One or more embodiments may use multiple connectors between powertrain components to adaptively use the powertrain depending on the needs of the vehicle at a given time.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A range extender system comprising:
a first electric machine;
a first gearbox;
an engine;
a first connector to couple and decouple the first electric machine to and from the engine; and
a second connector to couple and decouple the first electric machine to and
from the first gearbox.

2. The range extender system of claim 1, further comprising:
a first axle; and
a third connector to couple and decouple the first gearbox from the first axle.

3. The range extender system of any one of claims 1 to 2, wherein the first connector includes a first one-way clutch, and wherein the second connector includes a second one-way clutch;
wherein, preferably, the first connector includes a chain transfer.

4. The range extender system of any one of claims 1 to 3, wherein the engine is an internal combustion engine.

5. The range extender system of any one of claims 1 to 4, further comprising:
a first axle; and
a third connector to couple and decouple the engine from the first gearbox, wherein the engine drives the first axle directly or in parallel with the first electric machine via the third connector.

6. The range extender system of any one of claims 1 to 5, wherein the first connector is one or more of a damper, a chain transfer, or a one-way clutch;
and/or wherein the first connector includes a gear transfer that has a gear ratio of 3:1.

7. The range extender system of any one of claims 1 to 6, wherein the first connector includes a friction clutch or an electromechanical dog clutch; and/or wherein the second connector includes a differential disconnect.

8. The range extender system of any one of claims 1 to 7, further comprising:
a gear train coupled to the engine; and
a gear train coupled to the first electric machine, wherein the gear train of the engine and the gear train of the first electric machine are coupled to create a multi-speed connection between the engine and the first electric machine.

9. A hybrid vehicle comprising:
a battery;
a fuel tank;
a first electric machine;
a first gearbox;
an engine;
a first connector to couple and decouple the first electric machine to and from the engine; and
a second connector to couple and decouple the first electric machine to and from the first gearbox.

10. The hybrid vehicle of claim 9, further comprising a first axle, wherein the first electric machine is configured to drive the first axle when the engine is off, and wherein the first electric machine is configured to generate electric power that is stored in the battery when the second connector decouples the first electric machine from the first gearbox.

11. The hybrid vehicle of claim 9 or 10, wherein the first connector includes a one-way clutch;
and/or wherein the second connector includes a one-way clutch.

12. A range extender system comprising:
a first connector to couple and decouple an electric machine to and from an engine; and
a second connector to couple and decouple the electric machine to and from an axle.

13. The range extender system of claim 12, further comprising a gearbox connected to the axle, wherein the second connector couples and decouples the electric machine to and from the gearbox.

14. The range extender system of any one of claims 12 to 13, further comprising a third connector to couple and decouple the engine from the axle, and wherein the axle is driven with the engine directly or in parallel with the electric machine.

15. The range extender system of any one of claims 12 to 14, wherein the first connector includes a friction clutch;
and/or wherein the first connector includes a chain transfer.
